# EUROPEAN PATENT SPECIFICATION

(11) **EP 3 623 983 B1**
(45) Date of publication and mention of the grant of the patent: **18.11.2026**
(21) Application number: 19196983.1
(22) Date of filing: 12.09.2019
(51) Int. Cl.: G06F 21/57, G06F 21/55, H04L 9/40

(54) **METHOD AND DEVICE FOR IDENTIFYING SECURITY THREATS, STORAGE MEDIUM, PROCESSOR AND TERMINAL**
VERFAHREN UND VORRICHTUNG ZUR IDENTIFIZIERUNG VON SICHERHEITSBEDROHUNGEN, SPEICHERMEDIUM, PROZESSOR UND ENDGERÄT
PROCÉDÉ ET DISPOSITIF D'IDENTIFICATION DE MENACES À LA SÉCURITÉ, SUPPORT D'INFORMATIONS, PROCESSEUR ET TERMINAL

(30) Priority: 12.09.2018 CN 201811061492
(43) Date of publication of application: 18.03.2020
(73) Proprietor: Siemens Ltd. China, Beijing 100102 (CN)
(72) Inventor: TANG, Wen, Beijing, Beijing 100102 (CN)
(74) Representative: Isarpatent

(56) References cited:
- US-A1- 2016 253 232
- FU XIAOYU ET AL: "Digging deeper into cluster system logs for failure prediction and root cause diagnosis", 2014 IEEE INTERNATIONAL CONFERENCE ON CLUSTER COMPUTING (CLUSTER), IEEE, 22 September 2014 (2014-09-22), pages 103 - 112, XP032691894, DOI: 10.1109/CLUSTER.2014.6968768

## Description

### Technical Field

The present invention relates to the field of identification of security threats in an operation environment, and in particular relates to a method and device for identifying security threats, a storage medium, a processor and a terminal.

### Background Art

US 2016/253232 A1 relates to contextual graph matching based anomaly detection in an IT system context.

FU XIAOYU ET AL: "Digging deeper into cluster systems logs for failure prediction and root diagnosis" relates to method for failure detection based on analysing event log of large system.

The operational technology (OT) relates to the hardware and software which detect or cause changes caused by directly monitoring and/or controlling physical equipment, processes and events in an enterprise. The OT uses computers to monitor or change the physical states of systems, especially industrial control systems (ICSs), and these systems are computer-based facilities, systems and equipment and are used to remotely control and/or control key processes and physical functions. The OT has generally revealed the technical and functional differences between the traditional IT system environment and the ICS environment. The OT involves a supervisory control and data acquisition (SCADA) system, a distributed control system (DCS), a computer numeric control (CNC) system comprising computerized processing tools, and scientific equipment (for example, digital oscilloscope).

OT systems are traditionally closed systems designed to realize the production efficiency, operation efficiency and reliability, and security is not concerned. These systems rely on dedicated networks and hardware and have long been considered free from network attacks. With the development of the automatic manufacturing technology and the process control technology, the protection requirements for the computer environment of ICS/OT systems have become more and more important over the past years, however. The wide application of the information technology (IT), the evolution of the IT to an open system, the increase of the number of joint ventures, the increase of joint partners and outsourcing services, the increase of intelligent ICS equipment, the increase of connections with other equipment/software, and the increase of external connections and the rapid increase of network intrusion events will all cause the threats of network attacks to increase.

Currently, various security technologies are available, for example, intrusion detection system (IDS)/intrusion prevention system (IPS) and security information and event management (SIEM) system. As supplements to firewall or antivirus software, these technologies are used to cope with the ever-increasing network security events. However, the IDS/IPS/SIEM system has a high rate of false reports, that is to say, a legal behavior or mode may be identified as an attack behavior or mode. Since a large number of false reports are generated in a real network environment, security engineers or analysts have to spend a lot of energy and time in verifying the falsely reported information or selectively ignoring excessive false reports, even if some true attack alarms exist in these false reports.

Owing to the scarcity of security professionals who can identify true attacks or security risks from false reports in an operational environment (for example, ICS), this problem becomes more serious when the IDS/IPS or SIEM is applied to the operational environment.

### Summary of the Invention

The embodiments of the present invention provide a method and device for identifying security threats, a storage medium, a processor and a terminal to at least solve the problem with a high rate of false reports caused when security attacks or illegal behaviors in an operational environment are identified.

According to one aspect of the embodiments of the present application, a method for identifying security threats is provided, and the method comprises: collecting a plurality of security-related security events, wherein each security event contains a plurality of fields; for a first security event of the plurality of security events, searching one or more second security events related to the first security event from the plurality of security events according to one or more fields of the plurality of fields of the first security event, wherein one or more second security events and the first security event form event graphs; calculating the weights of the event graphs; sorting the event graphs according to the weights.

The present invention provides an association analysis solution which can determine the relationship between linked security events and identify the really related key behaviors to reduce the rate of false reports. The solution can provide a method of effectively monitoring the security in an operational environment to improve the security situation of the operational environment. A highly dynamic IT environment is based on interactions between human beings and therefore is highly unpredictable, while an operational environment is based on interactions between machines and therefore is determinable in essence. In the operational environment, the security alarms which are actually falsely reported are usually isolated random events. Real attacks or illegal behaviors consist of events which are linked to each other. These behaviors trigger security monitoring to generate security alarms or warnings, and meanwhile, these security events are represented by sequences or graphs of correlated security events. In the correlated event graphs, security events caused by threat behaviors consist of linked causalities. For this purpose, the present invention provides a method of associating security events into recurrent causalities of event graphs so as to identify security attacks or illegal behaviors in the operational environment and then to reduce the rate of false reports. The method according to the present invention can directly be integrated into IDS/IPS and SIEM solutions.

The method in the exemplary embodiments of the present application further comprises converting each security event according to conversion rules so as to map a plurality of fields of each security event into one or more feature sets. Through these conversions, the fields of original security events can be processed in turn so as to make preparations for the step of searching correlated events.

According to the method in the exemplary embodiments of the present application, one or more feature sets contains context information. The plurality of fields before conversions contain no context information. The one or more feature sets after conversions performed according to conversion rules contain context information, however. The efficiency of searching correlated events by use of context information is improved.

According to the method in the exemplary embodiments of the present application, a subject-predicate-object relationship exists between a plurality of feature sets. Therefore, the plurality of feature sets have expected relationships to facilitate the association of causalities of security events in the subsequent step.

According to the method in the exemplary embodiments of the present application, the conversion rules contains at least one of the following: directly using one or more fields as one or more feature sets, explaining one or more fields, and extracting a part of one or more fields as one or more feature sets. The conversion rules are applicable to security events containing fields of different types of information and can successfully convert these fields into a plurality of feature sets having the expected relationship.

According to the method in the exemplary embodiments of the present application, searching one or more second security events related to a first security event from a plurality of security events according to one or more fields of a plurality of fields of the first security event comprises searching one or more second security events related to the first security event by matching one or more features in one or more feature sets of the first security event with one or more features in one or more feature sets of the second security events. Each feature of the security events after the conversion can be used as a basis for searching correlated security events in the database, and these features represent the causalities between correlated security events.

According to the method in the exemplary embodiments of the present application, searching one or more second security events related to the first security event comprises searching one or more cause events triggering the first security event and one or more result events triggered by the first security event. Correlated events having causalities among a plurality of security events are linked together, and the searched cause events and result events and the first security event form a sequence of correlated security events or an event graph.

According to the method in the exemplary embodiments of the present application, features include time information, subject information and object information. Among the previous or later security events, the security events which have causalities can be determined according to the information. For example, among the previous security events, if the subject information of the first security event matches the object information of the second security event, then the second security event may be the cause event causing the first security event; if the object information of the first security event matches the subject information of the second security event, then the second security event may be the result event caused by the first security event.

According to the method in the exemplary embodiments of the present application, calculating the weights of event graphs comprises presetting a plurality of security levels, wherein each security event belongs to a security level of the plurality of security levels and a weight is assigned to each security level in order to calculate the weights of the event graphs according to the weights of the security levels of the plurality of security events. The weight of an event graph depends on the security levels of correlated security events. The larger the weights of the security levels of correlated security events are, the larger the weights of event graphs are.

According to the method in the exemplary embodiments of the present application, calculating the weights of event graphs according to the weights of the security levels of a plurality of security events comprises calculating the weights of event graphs according to the weights of the security levels of one or more second security events. The weight of an event graph depends on the weights of the security levels of the cause event and the result event, that is to say, the larger the weights of the correlated cause event and result event are, the larger the weight of the event graph is. The larger the weight of the event graph is, the higher the probability of a security event being an attack or illegal behavior is. In this case, the security event should be processed first.

According to the method in the exemplary embodiments of the present application, the first security event is a security event belonging to at least a security level of the plurality of security levels. When correlated security events are searched, highly suspected security events of a plurality of security events can be searched to obtain related security events and causalities.

According to the method in the exemplary embodiments of the present application, collecting a plurality of security-related security events comprises collecting a plurality of security logs and aggregating the plurality of collected security logs into a security event. Security logs can come from different hardware or software platforms and a security event is formed by aggregating a plurality of similar or related security logs.

According to another aspect of the embodiments of the present application, a device for identifying security threats is provided, and the device comprises a collecting unit, used to collect a plurality of security-related security events, wherein each security event contains a plurality of fields; a searching unit, used to search one or more second security events related to the first security event from the plurality of security events according to one or more fields of the plurality of fields of the first security event for a first security event of the plurality of security events, wherein one or more second security events and the first security event form event graphs; a calculating unit, used to calculate the weights of the event graphs; a sorting unit, used to sort the event graphs according to the weights. The device according to the present invention can provide a method of effectively monitoring the security in an operational environment to improve the security situation of the operational environment, and can also correlate security events into event graphs so as to identify security attacks or illegal behaviors in the operational environment and then to reduce the rate of false reports.

The device in the exemplary embodiments of the present application further comprises a converting unit, used to convert each security event according to conversion rules so as to map a plurality of fields of each security event into one or more feature sets. Through these conversions, the fields of original security events can be processed in turn so as to make preparations for the step of searching correlated events.

According to the device in the exemplary embodiments of the present application, one or more feature sets contains context information. The plurality of fields before conversions contain no context information. The one or more feature sets after conversions performed according to conversion rules contain context information, however. The efficiency of searching correlated events by use of context information is improved.

According to the device in the exemplary embodiments of the present application, a subject-predicate-object relationship exists between a plurality of features sets. Therefore, the plurality of feature sets have expected relationships to facilitate the association of causalities of security events in the subsequent step.

According to the device in the exemplary embodiments of the present application, the converting unit is further used to execute at least one of the following: directly using one or more fields as one or more feature sets, explaining one or more fields, and extracting a part of one or more fields as one or more feature sets. The conversion rules are applicable to security events containing fields of different types of information and can successfully convert these fields into a plurality of feature sets having the expected relationship.

According to the device in the exemplary embodiments of the present application, the searching unit is further used to search one or more second security events related to the first security event by matching one or more features in one or more feature sets of the first security event with one or more features in one or more feature sets of the second security events. Each feature of the security events after the conversion can be used as a basis for searching correlated security events in the database, and these features represent the causalities between correlated security events.

According to the device in the exemplary embodiments of the present application, the searching unit is further used to search one or more cause events triggering the first security event and one or more result events triggered by the first security event. Correlated events having causalities among a plurality of security events are linked together, and the searched cause events and result events and the first security event form a sequence of correlated security events or an event graph.

According to the device in the exemplary embodiments of the present application, features include time information, subject information and object information. Among the previous or later security events, the security events which have causalities can be determined according to the information.

According to the device in the exemplary embodiments of the present application, the calculating unit is further used to preset a plurality of security levels, wherein each security event belongs to a security level of the plurality of security levels and a weight is assigned to each security level in order to calculate the weights of the event graphs according to the weights of the security levels of the plurality of security events. The weight of an event graph depends on the security levels of correlated security events. The larger the weights of the security levels of correlated security events are, the larger the weights of event graphs are.

According to the device in the exemplary embodiments of the present application, the calculating unit is further used to calculate the weights of event graphs according to the weights of the security levels of one or more second security events. The weight of an event graph depends on the weights of the security levels of the cause event and the result event, that is to say, the larger the weights of the correlated cause event and result event are, the larger the weight of the event graph is. The larger the weight of the event graph is, the higher the probability of a security event being an attack or illegal behavior is. In this case, the security event should be processed first.

According to the device in the exemplary embodiments of the present application, the first security event is a security event belonging to at least a security level of the plurality of security levels. When correlated security events are searched, highly suspected security events of a plurality of security events can be searched to obtain related security events and causalities.

According to the device in the exemplary embodiments of the present application, the collecting unit is further used to collect a plurality of security logs and aggregating the plurality of collected security logs into a security event. Security logs can come from different hardware or software platforms and then the aggregating unit aggregates a plurality of similar or related security logs into a security event.

According to a further aspect of the present application, a storage medium is provided and is characterized in that the storage medium contains a stored program, wherein the program controls the execution of the above-mentioned method by the equipment where said storage medium is located when the program is run.

According to a fourth aspect of the present application, a processor is provided and is characterized in that the processor is used to run a program, wherein the program executes the above-mentioned method when the program is run.

According to a fifth aspect of the present application, a terminal is provided and the terminal comprises one or more processors, a storage and one or more programs, wherein one or more programs are stored in the storage and are configured to be executed by one or more processors, and one or more programs execute the above-mentioned method.

According to a sixth aspect of the present application, a computer program product is provided, the computer program product is tangibly stored in a computer readable medium and comprises computer executable instructions, and at least one processor executes the above-mentioned method when computer executable instructions are executed.

### Brief Description of the Drawings

The drawings constitute a part of the description and are used to help further understand the present invention. The drawings illustrate the embodiments of the present invention and are used together with the description to describe the principle of the present invention. In the drawings, identical components are denoted by the same reference numeral. In the drawings,
Fig. 1 shows the flowchart of the method for identifying security threats according to the embodiments of the present invention,
Fig. 2 shows the flowchart of the method for identifying security threats according to an exemplary embodiment of the present invention,
Fig. 3 shows the structure of the device for identifying security threats according to the embodiments of the present invention, and
Fig. 4 shows the structure of the device for identifying security threats according to an exemplary embodiment of the present invention.

### Detailed Description of the Invention

To let those skilled in the art better understand the technical solutions of the present invention, the following will clearly and completely describe the technical solutions in the embodiments of the present invention in combination with the drawings in the embodiments of the present invention. Obviously, the embodiments described are only a part, but not all of the embodiments of the present invention. All other solutions obtained by those skilled in the art on the basis of the embodiments of the present invention without any creative work should fall within the scope of protection of the present invention.

It should be noted that the terms "first" and "second" in the description, claims and the drawings are used to distinguish between similar objects, but not necessarily used to describe a specific order or sequence. It should be understood that the data used in such a way can be interchanged in a proper case so that the described embodiments of the present invention can be implemented in an order other than shown or described here. In addition, the terms "comprise" and "have" and their variants are intended to cover non-exclusive inclusions. For example, the process or method comprising a series of steps, or device, product or equipment comprising a series of units are unnecessarily limited to those clearly listed steps or units, but can comprise other steps or units which are not clearly listed or are intrinsic to the process, method, product or equipment.

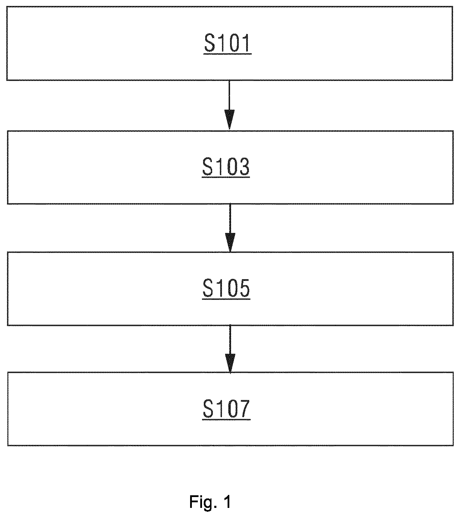

Fig. 1 shows the flowchart of the method for identifying security threats according to the embodiments of the present invention. The method for identifying security threats according to the embodiments of the present invention comprises:
Step S101: Collect a plurality of security-related security events, wherein each security event contains a plurality of fields. In the embodiments of the present application, security events contain different fields and the fields includes but are not limited to time stamp, host name, IP address, action, state, and file name or process name. Each security event corresponds to an important security activity which has happened. Each security event has a behavior source performing an action on an object or target.
Step S103: For a first security event of the plurality of security events, search one or more second security events related to the first security event from the plurality of security events according to one or more fields of the plurality of fields of the first security event, wherein one or more second security events and the first security event form event graphs. Among the collected security events, linked or correlated security events are determined. These security events are not isolated or random events. In addition, the security events which are obtained through searches and are linked to each other constitute a real attack or illegal behavior. The method according to the embodiments of the present application will link the correlated security events to constitute an event chain or behavior chain. The security events obtained through searches will be added to linked security events. The search process is repeated until no new event is correlated into the current event graph.
Step S105: Calculate the weights of event graphs. For example, a preset correlation function is used to calculate the weights of the relationships of potential correlated events so as to obtain the weights of the event graphs formed by correlated events and distinguish between a plurality of event graphs in terms of weights. For example, if the number of linked security events is large, and the weights of the relationships between linked security events or event linkages are large, then the weights of event graphs may be large, and the probability of these security events being isolated security events or random security events (namely, the rate of false reports) is low.
Step S107: Sort the event graphs according to the weights. Event graphs with different weights will be shown to a professional or security engineer according to different priorities. Therefore, these event graphs will be processed according to the preset priorities. For example, the event graph with the highest priority is first processed. The security engineers and analysts who deal with and monitor security events of operation events can easily decide to process the event graph with a higher weight because the possibility of falsely reporting the collection of security events in the event graph is much lower.

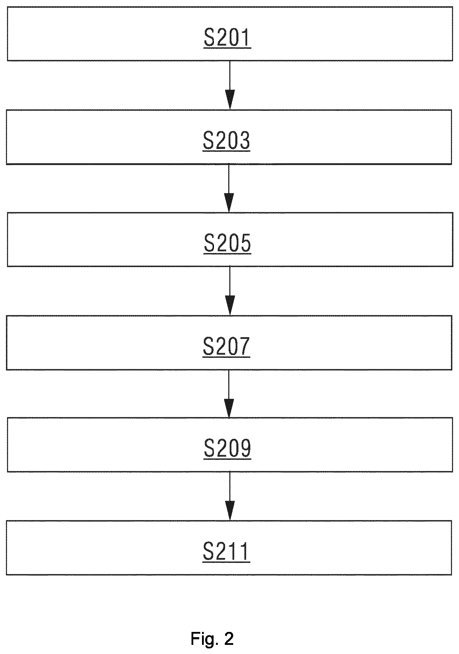

Fig. 2 shows the flowchart of the method for identifying security threats according to an exemplary embodiment of the present invention. As shown in Fig. 2, in step S201, a plurality of security logs are collected and the plurality of collected security logs are aggregated into a security event. For original security logs, for example, Windows event log and syslog of firewalls, network switches, routers or other sources, similar or related security logs are aggregated into a security event in an intuitive manner. For example, a port scanning event can be aggregated from thousands of security logs generated because of the access to different ports of a host. The aggregation rules include but are not limited to different scans, resource enumeration, account violence and denial of service (DoS). In the present embodiment, Windows event logs of workstations (including operator workstations, engineer workstations and other Windows servers) are collected by log collectors, including but not limited to ArcSight SmartConnector, McAfee Receiver, or open-source Logstash. Logs are in the common executable format (CEF). Windows event logs to be processed and correlated in the present embodiment include but are not limited to host login, directory service status, host logout, domain login, administrator login, network login, process status, object access status, authentication, service status, login, application status, database, auditing status, user account, security policy status, policy, account change, password change/resetting, account unlocking, system configuration, system status, account deletion/closing, account creation/enabling, priority change, non-administrator, log status, file status, other application events, accounting locking, administrative log, firewall rules/access control list (ACL) and DoS. Therefore, in the present embodiment, the prior method (for example, the method provided by SIEM) can be used to aggregate similar or related Windows security logs into security events. Events include but are not limited to a successive login attempt failure (from the same source to the same destination host), a sequential-port connection attempt and a sequential file/directory access.

In step S203, each security event is converted according to conversion rules so that the plurality of fields of each security event is mapped into one or more feature sets. In the present embodiment, the transformation configuration file in the YAML format is adopted to construct a subject-predicate-object relationship. The original fields of a security event are mapped into, for example, a context information containing subject-predicate-object relationship as shown below and the subject-predicate-object relationship is used for causalities: <source, action, destination> between security events in subsequent steps, that is to say, each security event has a subject serving as a behavior source performing an action on an object or target. For example, but not limited to this, the source IP address accesses a specific port of another IP address. To convert security events (fields) and construct the context of the subject-predicate-object relationship, the transformation configuration in the mapping rules defined below can be adopted:
Directly map the fields of an event into the features of a source, destination or behavior, for example,
mapped_field: original_field

Wherein, "original_field" is a field name in an original CEF event log, and "mapped_field" is a new field name after the conversion. If the field name recorded in an original event matches the "original_field" mode during the processing, then the field value is added to the new field name defined by "mapped_field". In addition, a plurality of original fields are allowed to be mapped into the same mapped field (separated by semicolon).

Inform the conversion function of how to explain the fields of the event, for example, convert the time stamp field from the epoch format to the "year-month-day hour:minute:second" format.The conversion rule not only maps the field name, but also informs how to explain the fields of an event. For example, the mapping rule for time stamp is
Time stamp: rt<"EPOCH">

It means that the original field "rt" is in the epoch format of the Linux system and needs to be converted from the epoch format to the ""year-month-day hour:minute:second".

Use a regular expression to extract a part of the fields of an original event as features of a source, destination or action. For example, the mapping rule is
src_ip:ORIGINAL_DATA["^((2[0-4]\d[25[0-5] \ [01] ?\d\d?) \) {3} (2 [0-4] \d\25 [0-5] \ [01] ?\d\d?) "]

It means that a regular expression is used to extract the IP address from ORIGINAL_DATA.

In the configuration, the fields recorded in an original event (log) are converted into a context information containing subject-predicate-object relationship by mapping original fields into fields with a prefix such as src_, act_ and dst_. The fields not defined in the configuration are mapped into "others" default fields. Based on these conversion rules, the fields of the original event can sequentially be processed and converted into new fields containing subject-predicate-object relationship context information and the new fields are used for subsequent recurrent causalities. A plurality of fields can be mapped into "source", "action" and "destination", and therefore, "source", "action" and "destination" respectively contain the corresponding feature sets. After steps S201 and S203, all security events will be stored in ElasticSearch in the <field with a prefix src_, field with a prefix act_, field with a prefix dst_, other fields> format and are searched based on different query conditions.

In the embodiments according to the present application, the above-mentioned execution sequence of steps S201 and S203 can be changed, that is to say, step S203 can be executed first, and then step S201 can be executed.

In step S205, a plurality of security levels are preset wherein each security event belongs to a security level of the plurality of security levels and a weight is assigned to each security level in order to calculate the weights of the event graphs according to the weights of the security levels of the plurality of security events. The weights of event graphs are calculated according to the weights of the security levels of one or more second security events. The first security event is a security event belonging to at least a security level of the plurality of security levels. In this step, after a security event conversion, the standard mode match and/or event correlation method (which can be configured from the SIEM) can be adopted to determine suspected events, for example,
- suspected security event, which can be resulted from a normal operation, illegal behavior or attack and is labeled as alarm. In the present embodiment, alarm events include but are not limited to a successive login failure and adding a new account.
   determined attack event, which is triggered by an attack or illegal behavior and is labeled as warning. In the present embodiment, warning events include but are not limited to use of mimikatz, exploitation of loopholes and execution of malicious programs.
   security events other than alarm or warning events. These security events are labeled as general events.

In the present embodiment, an initial weight is assigned to the type of each identified event, for example,
- 1 to a general event,
- 2 to an alarm event, and
- 4 to a warning event.

In step S207, one or more second security events related to the first security event are searched by matching one or more features in one or more feature sets of the first security event with one or more features in one or more feature sets of the second security events. One or more cause events triggering the first security event and one or more result events triggered by the first security event are searched. If more than two security events are linked together to form a tree structured event graph, then
one or more features in the destination feature set of one security event are correlated with the features in the source feature set of a plurality of other security events, or
one or more features in the source feature set of one security event are correlated with the features in the destination feature set of a plurality of other security events.

In this step, the linked security events will be correlated into an event graph based on the causal analysis. For example, for each security event whose security level is alarm or warning, the following correlation will be performed so as to identify the correlated event graph:
The security event is put into an event queue and all security events to be processed are stored in the queue.

The first security event is taken out of the queue.

For each source field (source feature) beginning with "src_" of the first security event, a second security event satisfying the following conditions is searched in the ElasticSearch database:
The time stamp of the second security event is earlier than the time stamp of the first security event, that is to say, the second security event happens before the first security event.
The value of the field ("src_") of the first security event is equal to or is a part of that of the destination field (beginning with "dst_") of the second security event.

Therefore, the second security event is the cause event triggering the first security event. In addition, a plurality of second security events which are the cause events of the first security event may exist. One pair or more pairs of linked security events are reserved as a part of the event graph and all correlated second security events are added to the event queue.

For each destination field beginning with "dst_" (namely, destination feature) of the first security event, a third security event satisfying the following conditions is searched in the ElasticSearch database:
The time stamp of the third security event is later than the time stamp of the first security event, that is to say, the third security event happens after the first security event.
The value of the field ("dst_") of the first security event is equal to or is a part of that of the source field (beginning with "src_") of the third security event.

Therefore, the third security event is the result event triggered by the first security event. In addition, a plurality of third security events which are the result events triggered by the first security event may exist. One pair or more pairs of linked security events are reserved as a part of the event graph and all correlated third security events are added to the event queue.

Steps S203 to S207 are repeated until the queue of the security events to be processed is empty. Finally, the security events in the event graph will be linked together.

In step S209, the weights of event graphs are calculated. In this step, the weights of correlated events of different event graphs are calculated. In the present embodiment, the following weighting function is adopted: $f \left({W}_{i}, V\right) = {\sum }_{i = 1}^{n} {W}_{i} \times V$

For each causality pair, v is the weight of a result event and wᵢ is the weight of a cause event. Since a plurality of cause events may exist, the sum is used to calculate the combined weight of the tree structured event sub-graph.

For example, for the event pair of each causality (cause and result), the weight of the event pair can be calculated in the following way:
if the two security events in a candidate security event pair are both warning events, then the weight of the event pair is 4×4=16;
if one is a warning event and the other is an alarm event, the weight of the event pair is 4×2=8;
if one is a warning event and the other is a general event, the weight of the event pair is 4×1=4;
if the two security events are alarm events, the weight of the event pair is 2×2=4;
if one is an alarm event and the other is a general event, the weight of the event pair is 2×1=2;
   - if the two security events are general events, the weight of the event pair is 1×1=1.

In the embodiments of the present application, event paths or event graphs with a low weight can be removed by presetting a threshold. If the weight obtained from calculations is less than the first threshold, then security events will not be correlated so as to reduce the amount of calculations. For example, if the combined weight is less than the threshold, the sub-graph is skipped, or not correlated. If the threshold is equal to 2, then a sub-graph containing at least an alarm or warning security event is combined into a larger event graph and normal security events are prevented from being linked into a larger event graph so as to avoid false reports.

In step S211, event graphs are sorted according to the weights of the event graphs. In this step, an event graph with a larger weight will be processed first. Therefore, security engineers or security analysts can more easily decide to process the event graph with a high weight because the possibility of the security events in the event graph being reported falsely is much lower.

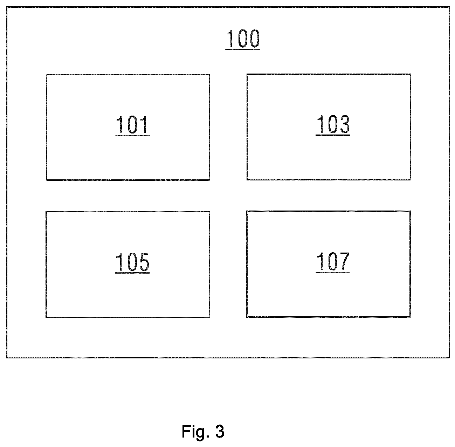

Fig. 3 shows the structure of the device for identifying security threats according to the embodiments of the present invention. As shown in Fig. 3, the device 100 comprises a collecting unit 101, which collects a plurality of security-related security events, wherein each security event contains a plurality of fields, a searching unit 103, which searches one or more second security events related to a first security event from the plurality of security events according to one or more fields of the plurality of fields of the first security event for the first security event of the plurality of security events, wherein one or more second security events and the first security event form event graphs, a calculating unit 105, which calculates the weights of the event graphs, and a sorting unit 107, which sorts the event graphs according to the weights. The device 100 described in Fig. 3 and the units in the device execute the method for identifying security threats in Fig. 1. Here, the execution of the method is not described again.

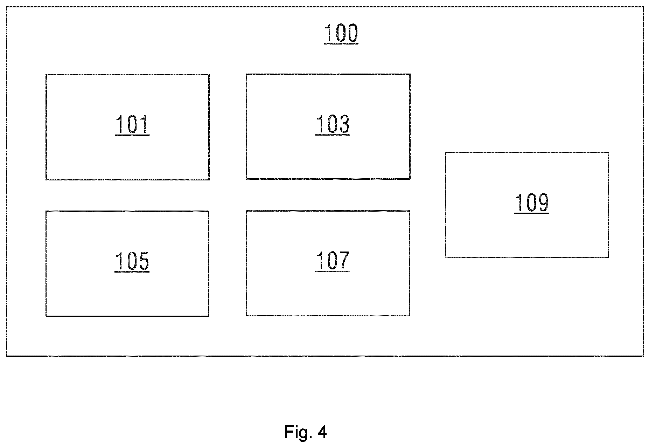

Fig. 4 shows the structure of the device for identifying security threats according to an exemplary embodiment of the present invention. Compared with the device 100 shown in Fig. 3, the device 100 in Fig. 4 further comprises a converting unit 109, which converts each security event according to conversion rules so as to map a plurality of fields of each security event into one or more feature sets. In addition, the converting unit 109 is further used to execute at least one of the following: directly using one or more fields as one or more feature sets, explaining one or more fields, and extracting a part of one or more fields as one or more feature sets. In the exemplary embodiment shown in Fig. 4, the searching unit 103 is further used to search one or more cause events triggering the first security event and one or more result events triggered by the first security event. The calculating unit 105 is further used to preset a plurality of security levels, wherein each security event belongs to a security level of the plurality of security levels and a weight is assigned to each security level in order to calculate the weights of the event graphs according to the weights of the security levels of the plurality of security events. The device 100 described in Fig. 4 and the units in the device execute the method for identifying security threats in Fig. 2. Here, the execution of the method is not described again.

According to another embodiment of the present application, a storage medium is provided and the storage medium contains a stored program, wherein the program controls the execution of the above-mentioned method for identifying security threats by the equipment where said storage medium is located when the program is run.

According to a further embodiment of the present application, a processor is provided and the processor is used to run a program, wherein the program executes the above-mentioned method for identifying security threats when the program is run.

According to a fourth embodiment of the present application, a terminal is provided and the terminal comprises one or more processors, a storage and one or more programs, wherein one or more programs are stored in the storage and are configured to be executed by one or more processors, and one or more programs execute the above-mentioned method for identifying security threats.

According to a fifth embodiment of the present application, a computer program product is provided, the computer program product is tangibly stored in a computer readable medium and comprises computer executable instructions, and at least one processor executes the above-mentioned method for identifying security threats when computer executable instructions are executed.

It should be understood that the technical content disclosed in the embodiments of the present application can be realized in other ways. The above-described embodiments of the device are given only for the exemplary purpose. The division of units or modules is only a logical function division, and other division methods can be used in the actual realization. For example, a plurality of units or modules or components can be combined or integrated into another system, or some features can be ignored or cannot be executed. In addition, the shown or discussed couplings, or direct couplings or communication connections between them can be indirect couplings or communication connections, electrical or otherwise, through some interfaces, modules or units.

The unit or module described as a separate part can be or cannot be physically separated, and the part shown as a unit or module can be or cannot be a physical unit or module, that is to say, it can be located at one place or can be distributed to a plurality of network units or modules. Part or all of the units or modules can be selected to realize the solutions of the embodiments according to the actual requirement.

In addition, the functional units or modules in each embodiment of the present application can be integrated into a processing unit or module, or each unit or module physically exists separately, or two or more units or modules are integrated into a unit or module. The above-mentioned integrated unit or module can be realized in the form of hardware or in the form of a software functional unit or module.

Said integrated unit can be stored in a computer-accessible storage medium if it is realized in the form of a software functional unit and is marketed or used as an independent product. Based on such an understanding, the technical solutions of the present application or the part which makes contributions to the prior art, or all or part of the technical solutions can essentially be embodied in the form of a software product, and the computer software product is stored in a storage medium and comprises a plurality of instructions to enable a computer (PC, server or network equipment) to execute all or part of the steps of the method described in the embodiments of the present application. The above-mentioned storage medium includes USB disk, read-only memory (ROM), random access memory (RAM), mobile hard disk, magnetic disk or compact disc and other media which can store program codes.

Only preferred embodiments of the present application are described above. The invention is defined by the appended claims.

## Claims

1. A method for identifying security threats, comprising:
collecting (S101) a plurality of security-related security events, wherein each security event contains a plurality of fields;
converting (S203) each security event according to conversion rules so as to map said plurality of fields of each security event into one or more feature sets, wherein the fields of each security event are mapped into a context information containing subject-predicate-object relationship used for causalities;
for a first security event of said plurality of security events, searching (S103, S207) one or more second security events related to said first security event from said plurality of security events by matching one or more features in one or more feature sets of the first security event with one or more features in one or more feature sets of the second security events, wherein said one or more second security events and said first security event form event graphs, wherein more than two security events are linked together to form a tree structured event graph, wherein the linked security events are correlated into the event graph based on a causality analysis, and wherein the searching is repeated until no new event is correlated into a current event graph;
calculating (S105) weights of said event graphs;
sorting (S107) the event graphs according to said weights; and
processing the event graph with the highest weight first.

2. The method as claimed in claim 1, **characterized in that** said conversion rules contain at least one of the following:
directly using one or more fields as said one or more feature sets,
explaining one or more fields, and
extracting a part of one or more fields as said one or more feature sets.

3. The method as claimed in claim 1 or 2, **characterized in that** searching one or more second security events related to said first security event comprises:
searching one or more cause events triggering said first security event and one or more result events triggered by said first security event.

4. The method as claimed in any of claims 1 to 3, **characterized in that** calculating the weights of said event graphs comprises:
presetting (S205) a plurality of security levels, wherein each security event belongs to a security level of said plurality of security levels and a weight is assigned to each security level in order to calculate the weights of said event graphs according to the weights of the security levels of said plurality of security events.

5. The method as claimed in claim 4, **characterized in that** said first security event is a security event belonging to at least a security level of said plurality of security levels.

6. The method as claimed in any of claims 1 to 5, **characterized in that** collecting a plurality of security-related security events comprises:
collecting a plurality of security logs and aggregating said plurality of collected security logs into a security event.

7. A device for identifying security threats, comprising units used to realize the steps of the method as claimed in any of claims 1 to 6.

8. A storage medium, **characterized in that** said storage medium contains a stored program, wherein said program controls the execution of the method as claimed in any of claims 1 to 6 by an equipment where said storage medium is located when said program is run.

9. A processor, **characterized in that** said processor is used to run a program, wherein said program executes the method as claimed in any of claims 1 to 6 when said program is run.

10. A terminal, comprising one or more processors, a storage and one or more programs, wherein said one or more programs are stored in said storage and are configured to be executed by said one or more processors, and said one or more programs execute the method as claimed in any of claims 1 to 6.

11. A computer program product, said computer program product being tangibly stored in a computer readable medium and comprising computer executable instructions, and at least one processor executing the method as claimed in any of claims 1 to 6 when said computer executable instructions are executed.

## Patentansprüche

1. Verfahren zur Identifizierung von Sicherheitsbedrohungen, umfassend:
Erfassen (S101) einer Mehrzahl von sicherheitsbezogenen Sicherheitsereignissen, wobei jedes Sicherheitsereignis eine Mehrzahl von Feldern enthält;
Umwandeln (S203) jedes Sicherheitsereignisses gemäß Umwandlungsregeln, um die Mehrzahl von Feldern jedes Sicherheitsereignisses in einen oder mehrere Merkmalssätze abzubilden, wobei die Felder jedes Sicherheitsereignisses in eine Kontextinformation abgebildet werden, die eine Subjekt-Prädikat-Objekt-Beziehung enthält, die für Kausalitäten verwendet wird;
für ein erstes Sicherheitsereignis der Mehrzahl von Sicherheitsereignissen Suchen (S103, S207) eines oder mehrerer zweiter Sicherheitsereignisse, die mit dem ersten Sicherheitsereignis in Beziehung stehen, aus der Mehrzahl von Sicherheitsereignissen durch Vergleichen eines oder mehrerer Merkmale in einem oder mehreren Merkmalssätzen des ersten Sicherheitsereignisses mit einem oder mehreren Merkmalen in einem oder mehreren Merkmalssätzen der zweiten Sicherheitsereignisse, wobei das eine oder die mehreren zweiten Sicherheitsereignisse und das erste Sicherheitsereignis Ereignisgraphen bilden, wobei mehr als zwei Sicherheitsereignisse miteinander verknüpft werden, um einen baumstrukturierten Ereignisgraphen zu bilden, wobei die verknüpften Sicherheitsereignisse basierend auf einer Kausalitätsanalyse in den Ereignisgraphen korreliert werden und wobei das Suchen wiederholt wird, bis kein neues Ereignis in einen aktuellen Ereignisgraphen korreliert wird;
Berechnen (S105) von Gewichtungen der Ereignisgraphen;
Sortieren (S107) der Ereignisgraphen gemäß den Gewichtungen; und Verarbeiten des Ereignisgraphen mit der höchsten Gewichtung zuerst.

2. Verfahren nach Anspruch 1, **dadurch gekennzeichnet, dass** die Umwandlungsregeln mindestens eines von Folgendem umfassen:
direktes Verwenden eines oder mehrerer Felder als den einen oder die mehreren Merkmalssätze,
Erläutern eines oder mehrerer Felder und
Extrahieren eines Teils eines oder mehrerer Felder als den einen oder die mehreren Merkmalssätze.

3. Verfahren nach Anspruch 1 oder 2, **dadurch gekennzeichnet, dass** das Suchen eines oder mehrerer mit dem ersten Sicherheitsereignis in Beziehung stehender zweiter Sicherheitsereignisse Folgendes umfasst:
Suchen eines oder mehrerer Ursachenereignisse, die das erste Sicherheitsereignis auslösen, und eines oder mehrerer Ergebnisereignisse, die durch das erste Sicherheitsereignis ausgelöst werden.

4. Verfahren nach einem der Ansprüche 1 bis 3, **dadurch gekennzeichnet, dass** das Berechnen der Gewichtungen der Ereignisgraphen Folgendes umfasst:
Voreinstellen (S205) einer Mehrzahl von Sicherheitsstufen, wobei jedes Sicherheitsereignis zu einer Sicherheitsstufe der Mehrzahl von Sicherheitsstufen gehört und jeder Sicherheitsstufe eine Gewichtung zugewiesen wird, um die Gewichtungen der Ereignisgraphen gemäß den Gewichtungen der Sicherheitsstufen der Mehrzahl von Sicherheitsereignissen zu berechnen.

5. Verfahren nach Anspruch 4, **dadurch gekennzeichnet, dass** das erste Sicherheitsereignis ein Sicherheitsereignis ist, das zu mindestens einer Sicherheitsstufe der Mehrzahl von Sicherheitsstufen gehört.

6. Verfahren nach einem der Ansprüche 1 bis 5, **dadurch gekennzeichnet, dass** das Erfassen einer Mehrzahl von sicherheitsbezogenen Sicherheitsereignissen Folgendes umfasst:
Erfassen einer Mehrzahl von Sicherheitsprotokollen und Aggregieren der Mehrzahl von erfassten Sicherheitsprotokollen zu einem Sicherheitsereignis.

7. Vorrichtung zum Identifizieren von Sicherheitsbedrohungen, umfassend Einheiten, die verwendet werden, um die Schritte des Verfahrens nach einem der Ansprüche 1 bis 6 zu realisieren.

8. Speichermedium, **dadurch gekennzeichnet, dass** das Speichermedium ein gespeichertes Programm enthält, wobei das Programm die Ausführung des Verfahrens nach einem der Ansprüche 1 bis 6 durch eine Einrichtung steuert, in der sich das Speichermedium befindet, wenn das Programm ausgeführt wird.

9. Prozessor, **dadurch gekennzeichnet, dass** der Prozessor zum Ausführen eines Programms verwendet wird, wobei das Programm das Verfahren nach einem der Ansprüche 1 bis 6 ausführt, wenn das Programm ausgeführt wird.

10. Endgerät, umfassend einen oder mehrere Prozessoren, einen Speicher und ein oder mehrere Programme, wobei das eine oder die mehreren Programme in dem Speicher gespeichert und dazu ausgelegt sind, von dem einen oder den mehreren Prozessoren ausgeführt zu werden, und das eine oder die mehreren Programme das Verfahren nach einem der Ansprüche 1 bis 6 ausführen.

11. Computerprogrammprodukt, wobei das Computerprogrammprodukt greifbar in einem computerlesbaren Medium gespeichert ist und computerausführbare Anweisungen umfasst und mindestens ein Prozessor das Verfahren nach einem der Ansprüche 1 bis 6 ausführt, wenn die computerausführbaren Anweisungen ausgeführt werden.

## Revendications

1. Procédé d'identification de menaces à la sécurité comprenant :
la collecte (S101) d'une pluralité d'événements de sécurité liés à la sécurité, chaque événement de sécurité contenant une pluralité de champs ;
la conversion (S203) de chaque événement de sécurité conformément à des règles de conversion de sorte à cartographier ladite pluralité de champs de chaque événement de sécurité en un ou plusieurs ensembles de caractéristiques, les champs de chaque événement de sécurité étant cartographiés en une information de contexte contenant une relation sujet-prédicat-objet utilisée pour des causalités ;
pour un premier événement de sécurité de ladite pluralité d'événements de sécurité, la recherche (S103, S207) d'un ou de plusieurs seconds événements de sécurité liés audit premier événement de sécurité parmi ladite pluralité d'événements de sécurité en mettant en correspondance une ou plusieurs caractéristiques d'un ou de plusieurs ensembles de caractéristiques du premier événement de sécurité avec une ou plusieurs caractéristiques d'un ou de plusieurs ensembles de caractéristiques des seconds événements de sécurité, lesdits un ou plusieurs seconds événements de sécurité et ledit premier événement de sécurité formant des graphes d'événements, plus de deux événements de sécurité étant liés ensemble pour former un graphe d'événements structuré en arborescence, les événements de sécurité liés étant corrélés dans le graphe d'événements sur la base d'une analyse de causalité, et la recherche étant répétée jusqu'à ce qu'aucun nouvel événement ne soit corrélé dans un graphe d'événements en cours ;
le calcul (S105) des poids desdits graphes d'événements ;
le tri (S107) les graphes d'événements en fonction desdits poids ; et
le traitement du graphique d'événements présentant le poids le plus élevé en premier.

2. Procédé selon la revendication 1, **caractérisé en ce que** lesdites règles de conversion contiennent au moins l'une parmi :
l'utilisation directe d'un ou de plusieurs champs comme lesdits un ou plusieurs ensembles de caractéristiques,
l'explication d'un ou de plusieurs champs, et
l'extraction d'une partie d'un ou de plusieurs champs en tant que lesdits un ou plusieurs ensembles de caractéristiques.

3. Procédé selon la revendication 1 ou 2, **caractérisé en ce que** la recherche d'un ou de plusieurs seconds événements de sécurité liés audit premier événement de sécurité comprend :
la recherche d'un ou de plusieurs événements de cause déclenchant ledit premier événement de sécurité et d'un ou plusieurs événements de résultat déclenchés par ledit premier événement de sécurité.

4. Procédé selon l'une quelconque des revendications 1 à 3, **caractérisé en ce que** le calcul des poids desdits graphes d'événements comprend :
le préréglage (S205) d'une pluralité de niveaux de sécurité, chaque événement de sécurité appartenant à un niveau de sécurité de ladite pluralité de niveaux de sécurité et un poids étant attribué à chaque niveau de sécurité afin de calculer les poids desdits graphes d'événements en fonction des poids des niveaux de sécurité de ladite pluralité d'événements de sécurité.

5. Procédé selon la revendication 4, **caractérisé en ce que** ledit premier événement de sécurité est un événement de sécurité appartenant à au moins un niveau de sécurité de ladite pluralité de niveaux de sécurité.

6. Procédé selon l'une quelconque des revendications 1 à 5, **caractérisé en ce que** la collecte d'une pluralité d'événements de sécurité liés à la sécurité comprend :
la collecte d'une pluralité de journaux de sécurité et l'agrégation de ladite pluralité de journaux de sécurité collectés en un événement de sécurité.

7. Dispositif d'identification de menaces à la sécurité comprenant des unités utilisées pour réaliser les étapes du procédé selon l'une quelconque des revendications 1 à 6.

8. Support d'informations, **caractérisé en ce que** ledit support d'informations contient un programme stocké, ledit programme commandant l'exécution du procédé selon l'une quelconque des revendications 1 à 6 par un équipement dans lequel ledit support d'informations est situé lorsque ledit programme est exécuté.

9. Processeur, **caractérisé en ce que** ledit processeur est utilisé pour exécuter un programme, ledit programme exécutant le procédé selon l'une quelconque des revendications 1 à 6 lorsque ledit programme est exécuté.

10. Terminal, comprenant un ou plusieurs processeurs, une mémoire, et un ou plusieurs programmes, lesdits un ou plusieurs programmes étant stockés dans ladite mémoire et étant configurés pour être exécutés par lesdits un ou plusieurs processeurs, et lesdits un ou plusieurs programmes exécutant le procédé selon l'une quelconque des revendications 1 à 6.

11. Produit-programme informatique, ledit produit-programme informatique étant stocké de manière tangible dans un support lisible par ordinateur et comprenant des instructions exécutables par ordinateur, et au moins un processeur exécutant le procédé selon l'une quelconque des revendications 1 à 6 lorsque les instructions exécutables par ordinateur sont exécutées.
